(19) Europäisches Patentamt / European Patent Office / Office européen des brevets

(11) **EP 3 763 841 A1**

(12) **EUROPEAN PATENT APPLICATION**
published in accordance with Art. 153(4) EPC

(43) Date of publication:
**13.01.2021 Bulletin 2021/02**

(21) Application number: **18908606.9**

(22) Date of filing: **06.03.2018**

(51) Int Cl.:
*C22C 1/08* (2006.01)    *B29C 33/38* (2006.01)
*B29C 51/26* (2006.01)    *B29C 44/58* (2006.01)
*B22F 3/11* (2006.01)

(86) International application number:
**PCT/RU2018/000133**

(87) International publication number:
**WO 2019/172796 (12.09.2019 Gazette 2019/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Chernyy, Maxim Lvovich**
**Ekaterinburg, 620014 (RU)**

(72) Inventors:
• **HUSNULLIN, Dmitry Valerjevich**
  **Ekaterinburg, 620100 (RU)**
• **FINKELSTEIN, Arkady Borisovich**
  **Ekaterinburg, 620027 (RU)**
• **CHERNYY, Maxim Lvovich**
  **Ekaterinburg, 620014 (RU)**

(74) Representative: **Spengler, Robert**
  **Küfergasse 11**
  **89073 Ulm (DE)**

(54) **FORMING ELEMENT OF A MOULD FOR THERMOFORMING ARTICLES MADE FROM FOAMED THERMOPLASTIC POLYMERS AND METHOD FOR THE MANUFACTURE THEREOF**

(57) The invention pertains to manufacturing forming elements for moulds from porous aluminium produced by the vacuum impregnation of a soluble filler with liquid metal, for use in moulds for producing articles made from foamed thermoplastic polymers. A forming element is comprised of a mechanically treated composite cast made from porous aluminium, produced by the vacuum impregnation of a soluble filler with an aluminium melt and the subsequent crystallization of the melt, the dimensions of said cast being stabilized by forced thermal cycling during extraction of the filler. The present method includes producing a composite metal/filler cast by the vacuum impregnation of a soluble filler with an aluminium melt and the subsequent crystallization of the melt, said cast being subjected after mechanical treatment to forced thermal cycling during extraction of the filler in a "rinsing-heating-cooling" cycle, wherein the cycle is repeated until the filler has been completely removed from the mechanically treated cast and the dimensions of the cast have been stabilized. The invention makes it possible to produce a forming element of a mould from porous aluminium, which has stable dimensions when deployed under thermal cycling conditions in the presence of water and steam.

EP 3 763 841 A1

**Description**

*Field of the Invention*

The invention pertains to the manufacture of forming elements of a mould from porous aluminum, obtained by vacuum impregnation of a soluble filler with liquid metal, which can be used in moulds for the manufacture of articles from foamed thermoplastic polymers.

*Description of the Related Art*

For the manufacture of shaped articles from foamed plastics, moulds of various design made from various materials are currently used. So, it is known that molded articles from polystyrene with external thermal shock are manufactured using forming elements made from solid metal with perforated walls, equipped with porous vents (V.S. Shulyak. Cavityless casting, St.Petersburg:Metallurgy, 2007. - p.61-65 [1].

FiatTeksid porous plastics are also used to obtain forming elements of a mould. In this case, the effective surface of an element is coated with copper or nickel by electroforming (V.S.Shulyak. Cavityless casting, St.Petersburg: Metallurgy, 2007.-p.78-81) [2]

Those skilled in the art know that moulds are obtained from expandable polystyrene using forming elements made of heat-resistant polymeric materials with the addition of metal particles (RU 2379151 publ.20.01.2010) [3]. The use of polymeric materials in some way will simplify the process of manufacturing moulds, however, plastics have very low thermophysical properties and low strength characteristics at elevated temperatures, which reduces the durability and capacity of moulds.

Moulds with the use of forming elements made of porous material METAPOR, which is essentially aluminum powder mixed with an organic binder (US 6257866, publ. 10.07.2001), are well-known [4]. The use of this composite material makes it possible to obtain high-quality articles from expandable polystyrene, however, the price for METAPOR is quite high.

Thus, the known moulds using the above-described forming elements are characterized either by low thermophysical properties and low strength parameters under conditions of elevated operating temperatures, or by the high cost of materials used for their manufacture.

A permeable forming element of the mould is known to be used for the manufacture of articles from expandable polystyrene (WO2006011878, publ. 02.02.2006) [5]. Such an element can be made of a porous permeable material, for example, from aluminum, titanium, nickel, iron and their alloys by sintering, powder metallurgy, SHS synthesis, 3D printing. Steam, or cooling water are fed into the working cavity of the mould through a permeable forming element, and gases are removed from it. In a particular case, a forming element can be made of solid metal, but with vents made of a porous permeable material located along its entire effective surface, which complicates and increases the cost of the manufacturing process of an element.

The closest to the invention is a forming element made of porous aluminum. However, if a forming element of the mold is made of porous aluminum, as indicated above, by sintering, powder metallurgy, SHS synthesis, or 3D printing, then the significant disadvantages of this article will be:

- high cost of manufacturing large-sized forming elements,

- low productivity of additive manufacturing methods.

Therefore, the object of the present invention is to reduce the weight of the mould, to simplify and reduce the cost of the manufacturing process.

Among the methods for the manufacture of a mould element from porous aluminum, the application WO2006011878 does not mention a method of vacuum impregnation of a soluble filler with liquid metal, which, in relation to sintering, powder metallurgy, SHS synthesis, or 3D printing, has a number of advantages:

- the cost of mass production of porous articles is close to the cost of conventional casting into a metal mould;

- the ability to get workpieces close in shape to final articles;

- low cost of tooling in comparison with the methods of sintering and powder metallurgy;

- high performance.

However, an article obtained by vacuum impregnation of a soluble filler with liquid metal will be distinguished by an irreversible increase in its size when operating under thermal cycling conditions in the presence of water and steam. This effect is associated with the oxidation of the inner surface of aluminum throughout the entire volume of the article and can be the reason for the discrepancy between the sizes of the forming elements of the mould and the sizes of articles manufactured in a mould using such forming elements.

The authors found that the forming elements of the mould made by the method of vacuum impregnation of a soluble filler with liquid metal should be preliminarily stabilized in size by the method of forced thermal cycling during the extraction of the filler.

The process of removing the filler from a composite casting provides for the dissolution of the filler in the "rinsing-heating-cooling" mode, the temperature regime of which is similar to the operating conditions of the mould, namely: heating to 150-200°C, cooling to room temperature in water. Accordingly, the step of removing a filler from the "metal-soluble filler" composite preform can be used to stabilize the dimensions of the mould.

Closest to the claimed method of manufacturing the forming elements of the mould is a method of obtaining a porous structure of cast aluminum (US3236706, publ.22.02.1966, [6], US3138856, publ. 30.06.1964.) [7]. This method includes pouring an aluminum melt into the filling of a refractory soluble filler under the action of a certain pressure drop in the melt, followed by crystallization of the melt, mechanical treatment of the resulting casting, and dissolution of the filler. The porous aluminum obtained in this way is characterized by a low (two times lower than solid aluminum) density, heat resistance up to 300°C, and therefore it is preferable for the manufacture of articles operating under thermal cycling conditions in the presence of water and steam.

***Summary of the Invention***

Unlike the prototype, where the forming elements can be made of porous aluminum by sintering, powder metallurgy, SHS synthesis, 3D printing, the mould elements of the present invention are made of porous aluminum obtained by vacuum impregnation of a soluble filler with liquid metal. This method makes it possible to manufacture a forming element of a mould from porous aluminum as a single piece with effective surface of any geometry, with no need to perforate and install any vents. The structure of a mould element made of porous aluminum, obtained in this way, has a porosity of 45 ... 65%, allowing steam and cooling water to pass into the mould cavity and remove gases from it. Therefore, the advantage of moulds with forming elements made of porous aluminum is their low weight, as well as high and uniform permeability of the entire forming surface of the mould. There is no need to use vents in such forming elements, which obviously simplifies and reduces the cost of their manufacture.

The main advantage of forming elements for moulds obtained by the method of vacuum impregnation of a soluble filler with liquid metal is the ability to produce elements with stabilized dimensions, which is realized due to a special processing mode of the casting after its crystallization. Since it was found that with an increase in the number of cycles "rinsing-heating-cooling", characteristic of the process of removing the filler from the casting, the lengthening of its dimensions will stop, the resulting composite casting "metal-filler" is subjected to forced thermal cycling when extracting the filler in the cycle "rinsing - heating - cooling ", which is repeated until complete removal of the filler from the casting and stabilization of its dimensions. The term "forced thermal cycling" here means that it is not necessary for the actual process of vacuum impregnation of a soluble filler with liquid metal and subsequent removal of the filler.

A new technical result achieved by the claimed invention is the ability to obtain forming elements of a mould from porous aluminum with stable dimensions when operating under conditions of thermal cycling in the presence of water and steam.

***Brief Description of Drawings***

The invention is illustrated as follows. FIG. 1 is a graph of the dependence of the coefficient of irreversible increase in the size of the workpiece in the process of thermal cycling in the presence of water and steam on the average pore size of porous aluminum; Fig. 2 is a drawing of the manufactured block of the mould, top view, for Example 1; Fig. 3 is a drawing of the manufactured block of the mould, front view, section, for Example 1; Fig. 4 is a drawing of the blank of the manufactured block of the mould in the form of a block with machining allowances, front view, section, for Example 2. The table shows dimensions for the block of the mould specified by the drawing and dimensions for machining the blank of the block calculated by the formula (1) for Example 1.

***Detailed Description of the Embodiment***

The forming elements of the mould are made as follows. First, a "metal-soluble filler" composite casting is produced by vacuum impregnation of a soluble filler with liquid metal, after mechanical processing it is subjected to the extraction of the filler with forced thermal cycling in a "rinsing - heating - cooling" cycle, which is repeated until the filler is completely removed from the mechanically treated casting and the size is stabilized. Thus, in the process of extracting the filler, the filler is removed from the machined casting (billet) and, at the same time, its dimensions are stabilized.

Obtaining a forming element of a mould with stable dimensions is possible in several ways, for example:

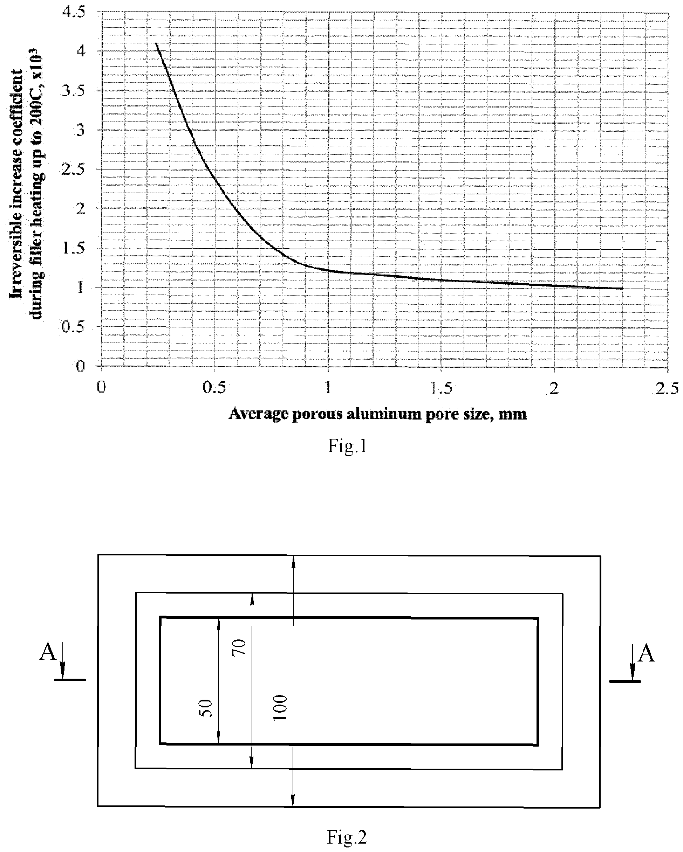

a) the casting "metal-filler" is subjected to mechanical processing according to its dimensions, taking into account their further irreversible increase in the process of thermal cycling in the presence of water and steam, the filler is removed from the obtained workpiece in the cycle "rinsing-heating-cooling", which is repeated until the filler is completely removed from the workpiece and its dimensions are stabilized. As a result, the dimensions of the workpiece are increased to the dimensions specified in the drawing. Consideration of the irreversible increase is carried out using the experimental values of the coefficient of irreversible increase in the size of the workpiece, obtained for the technological heating temperature in the process of removing the filler (Fig. 1).

b) the casting "metal-filler" is subjected to preliminary machining to dimensions close to the specified ones, taking into account the possible increase in the dimensions of the workpiece in the process of extracting the filler. Next, the filler is removed in the "rinsing - heating - cooling" cycle, which is repeated until the filler is completely removed from the workpiece and its dimensions are stabilized, which occurs when the workpiece size stops increasing. After that, the workpiece is subjected to finished machining to the dimensions specified by the drawing.

Manufacturing of forming elements of a mould in terms of a matrix using two options for forced thermal cycling is illustrated by the following examples.

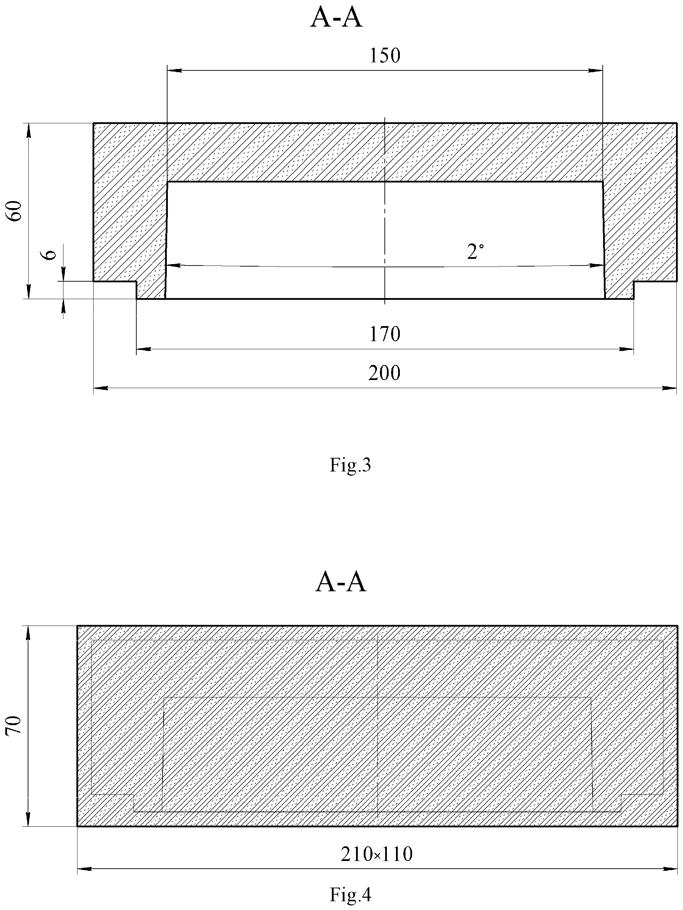

Example 1. A mould block is produced with the dimensions given by the drawing (Fig. 2, 3). For this, from the aluminum alloy AK7ch GOST 1583-93, containing 7% silicon and NaCl fraction filler 0.14-0.315 a composite casting of the composition "metal-filler" is obtained, in this example "AK7-NaCl". After cooling and knocking out of the casting mould, it is machined, after which a workpiece is obtained having dimensions smaller than the matrix dimensions specified in the drawing by the amount of their irreversible increase under conditions of thermal cycling in the presence of water and steam. Correction of the size of the workpiece is carried out according to the following formulae:

$$L_0 = \frac{L}{\gamma + 1} \qquad\qquad (1)$$

where $L_0$ is the size of the workpiece, taking into account the correction for its irreversible increase under conditions of thermal cycling in the presence of water and steam; $L$ - the size of the matrix specified by the drawing; $\gamma$ - the coefficient of irreversible increase in the size of the workpiece under conditions of thermal cycling in the presence of water and steam. The value of the coefficient is selected according to the graph (Fig. 1) $\gamma = 4.6 \times 10\text{-}3$ for an average pore size of 0.23 mm, corresponding to the used filler fraction. The dimensions for machining the matrix blank, calculated by formulae (1), are shown in the table. The NaCl filler is extracted from the workpiece. For this, the workpiece is heated in a thermal furnace up to 200°C for 40 minutes, maintaining a stable temperature using a relay. For uniform heating of the working chamber, the air in the drying oven is circulated by a fan. Then the workpiece is removed from the furnace and immediately cooled by immersion in a water bath. The bath is provided with water circulation to ensure the convective extraction mode. The cycle "rinsing-heating-cooling" is repeated 4-5 times. Upon completion of the extraction process, the dimensions of the mould block are controlled. The dimensions of the workpiece deliberately reduced at the stage of machining are increased up to the size of the block manufactured during thermocycling.

Example 2. A mould block with the dimensions given by the drawing (Figure 2, 3) is obtained. To do this, from the aluminum alloy AK7ch GOST 1583-93, containing 7% silicon and filler NaCl fraction 0.14-0.315, a composite casting of the composition "metal-filler" is obtained, in this example "AK7-NaCl" in the form of a block with allowances for machining 5 mm, (Fig. 4). After cooling and knocking out of the mould, it is subjected to preliminary machining to remove the surface layer, for which 2.0 mm is removed by milling from each side of the block. Next, the NaCl filler is extracted from the workpiece. For this, the workpiece is heated in a thermal furnace up to 200°C for 40 minutes, maintaining a stable temperature using a relay. For uniform heating of the charge, the air is circulated in the drying oven. Then the workpiece is removed from the furnace and immediately cooled by immersion in a water bath. The bath is provided with water circulation to ensure the convective extraction mode. The cycle "rinsing-heating-cooling" is repeated until the increase in the size of the workpiece stops. Upon completion of the extraction process, a finishing machining is carried out. Dimension control is carried out.

The claimed method can be used to obtain other permeable forming elements, such as a punch, an ejector plane, and others.

Table

| Mould block dimensions specified by drawing, mm | Dimensions for machining the block die calculated by formulae (1), mm |
|---|---|
| 50 | 49.80 |
| 70 | 69.71 |
| 100 | 99.59 |
| 150 | 149.39 |
| 170 | 169.31 |
| 200 | 199.18 |
| 60 | 59.76 |
| 6 | 5.98 |

**Claims**

1. A forming element of a mould for thermoforming articles from foamed thermoplastic polymers, made of porous aluminum, **characterized in that** the forming element is made of a mechanically processed composite casting of porous aluminum, obtained by vacuum impregnation of a soluble filler with an aluminum melt, followed by crystallization of the melt, stabilized in dimensions by forced thermal cycling in the process of extracting the filler.

2. A method of manufacturing a shaping element of moulds for thermal molding of articles made of foamed thermoplastic materials, including obtaining a composite casting of a "metal-filler" composition by vacuum impregnation of a soluble filler with an aluminum melt followed by crystallization of the melt, **characterized in that** the shaping element of a mould is made of composite casting, which, after machining, is subjected to forced thermal cycling during the extraction of the filler in the "rinsing - heating - cooling" cycle, while the cycle is repeated until the filler is completely removed from the machined casting and its dimensions are stabilized.

Fig.1

Fig.2

## A-A

Fig.3

## A-A

Fig.4

# EP 3 763 841 A1

## INTERNATIONAL SEARCH REPORT

| International application No. |
|---|
| PCT/RU 2018/000133 |

**A. CLASSIFICATION OF SUBJECT MATTER**
*C22C 1/08 (2006.01)*
*B29C 33/38 (2006.01)*
*B29C 51/26 (2006.01)*
*B29C 44/58 (2006.01)*
*B22F 3/11 (2006.01)*

According to International Patent Classification (IPC) or to both national classification and IPC

**B. FIELDS SEARCHED**

Minimum documentation searched (classification system followed by classification symbols)

C22C 1/00, 1/08, B29C 33/00, 33/38, 44/00, 44/34, 44/58, 51/00, 51/26, B22F 3/00, 3/10, 3/11

Documentation searched other than minimum documentation to the extent that such documents are included in the fields searched

Electronic data base consulted during the international search (name of data base and, where practicable, search terms used)

PatSearch (RUPTO internal), Esp@cenet, PAJ, USPTO, Information Retrieval System of FIPS

**C. DOCUMENTS CONSIDERED TO BE RELEVANT**

| Category* | Citation of document, with indication, where appropriate, of the relevant passages | Relevant to claim No. |
|---|---|---|
| A | US 3138856 A (HENRY A. KUCHEK) 30.06.1964, the claims | 1, 2 |
| D, A | US 3236706 A (N.A. KUCHEK) 22.02.1966, the claims | 1, 2 |
| A | US 4314399 A (LARS M. SEVERINSSON) 09.02.1982, abstract | 1, 2 |
| A | SU 1152697 A (UFIMSKII AVIATSIONNGI INSTITUT IM. SERGO ORDZHONIKIDZE) 30.04.1985, abstract | 1, 2 |
| D, A | WO 2006/011878 A1 (EX ONE CORPORATION et al.) 02.02.2006, the claims | 1, 2 |

☐ Further documents are listed in the continuation of Box C.      ☐ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 December 2018 (06.12.2018) | 13 December 2018 (13.12.2018) |

| Name and mailing address of the ISA/ | Authorized officer |
|---|---|
| | |
| Facsimile No. | Telephone No. |

Form PCT/ISA/210 (second sheet) (July 1998)

8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2379151
- US 6257866 B
- WO 2006011878 A
- US 3236706 A
- US 3138856 A

**Non-patent literature cited in the description**

- **V.S. SHULYAK.** Cavityless casting. Metallurgy, 2007, 61-65
- **V.S.SHULYAK.** Cavityless casting. Metallurgy, 2007, 78-81